# EUROPEAN PATENT APPLICATION

(11) **EP 4 756 994 A1**
(43) Date of publication of application: **10.06.2026**
(21) Application number: 24894533.9
(22) Date of filing: 15.11.2024
(51) Int. Cl.: H01M 10/613, H01M 10/6557, H01M 10/625, H01M 10/6556, H01M 50/213

(54) **BATTERY PACK AND VEHICLE COMPRISING SAME BATTERY PACK**

(30) Priority: 24.11.2023 KR 20230165927
(71) Applicant: LG Energy Solution, Ltd., Seoul 07335 (KR)
(72) Inventor: KIM, Ji-Hun, Daejeon 34122 (KR); BAEK, Seung-Ryul, Daejeon 34122 (KR); YANG, Kun-Joo, Daejeon 34122 (KR)
(74) Representative: Plasseraud IP
(86) International application number: PCT/KR2024/018101
(87) International publication number: WO 2025/110640

(57) **Abstract**

Disclosed is a battery pack, which includes a cell array structure including a plurality of battery cells and a plurality of cooling tubes provided between the plurality of battery cells; and a pack case configured to accommodate the cell array structure and having a cooling medium channel in communication with the plurality of cooling tubes.

## Description

### TECHNICAL FIELD

The present disclosure relates to a battery pack and a vehicle including the battery pack, and more particularly, to a battery pack with improved energy density and a vehicle including the battery pack.

This application is based on and claims priority from Korean Patent Application No. 10-2023-0165927, filed on November 24, 2023, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

A conventional battery pack has a cooling line structure for cooling battery cells. The cooling line structure is configured to include a plurality of cooling tubes provided between battery cells, a cooling line connected to an external cooling device for supplying or recovering a cooling medium to/from the plurality of cooling tubes, and a cooling pipe connecting the cooling line and the plurality of cooling tubes.

The conventional cooling pipe is generally formed to a predetermined length within the pack case of the battery pack for connection with a plurality of cooling tubes, and is provided on both sides of an edge within the pack case of the battery pack.

However, the cooling pipe structure of the conventional battery pack has a problem in that the volume occupied within the pack case increases, which is disadvantageous in terms of the energy density of the battery pack. In addition, the cooling structure of the conventional battery pack has a problem in that the connection structure of the cooling pipes connected to a plurality of cooling tubes becomes complicated, and the assembly process also becomes complicated.

Therefore, it is necessary to find a way to provide a battery pack that may increase space utilization and energy density. In addition, it is necessary to find a way to increase process efficiency by increasing assembly efficiency.

### DISCLOSURE

### Technical Problem

Therefore, the present disclosure is directed to providing a battery pack that may increase space utilization and maximize energy density by simplifying a cooling line structure, and a vehicle including the battery pack.

In addition, the present disclosure is directed to providing a battery pack that may increase process efficiency by increasing assembly efficiency, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack, comprising: a cell array structure including a plurality of battery cells and a plurality of cooling tubes provided between the plurality of battery cells; and a pack case configured to accommodate the cell array structure and having a cooling medium channel in communication with the plurality of cooling tubes.

Also, preferably, the cooling medium channel may be formed integrally with the pack case.

Also, preferably, the cooling medium channel may be provided inside a side edge of the pack case and connected to an external cooling device outside the pack case.

Also, preferably, the pack case may include a bottom plate configured to support the cell array structure; and an outer side wall connected to the bottom plate and surrounding an edge of the cell array structure, and the cooling medium channel may be formed in the outer side wall.

Also, preferably, the cooling medium channel may include a cooling medium supply channel configured to supply a cooling medium to the plurality of cooling tubes; and a cooling medium discharge channel separated from the cooling medium supply channel and configured to discharge a cooling medium, which has circulated through the plurality of cooling tubes, to an external cooling device.

Also, preferably, the cooling medium supply channel and the cooling medium discharge channel may be arranged to be spaced apart from each other by a predetermined distance in a height direction of the pack case.

Also, preferably, the battery pack may further comprise a connector unit connected to the plurality of cooling tubes and coupled to the pack case in communication with the cooling medium channel.

Also, preferably, the connector unit may connect the plurality of cooling tubes and the pack case in a space between the cell array structure within the pack case and the pack case.

Also, preferably, a cooling medium inlet/outlet to guide inflow and outflow of the cooling medium may be provided at an end of the plurality of cooling tubes, and the cooling medium inlet/outlet may be provided between the plurality of battery cells and the pack case.

Also, preferably, the connector unit may have a shorter length than the cooling medium inlet/outlet in a longitudinal direction of the plurality of cooling tubes.

Also, preferably, the connector unit may be provided in plurality corresponding to the number of the plurality of cooling tubes, and connect each cooling tube to the cooling medium channel of the pack case to communicate with the cooling medium channel.

Also, preferably, each of the plurality of connector units may include a supply connector configured to supply a cooling medium to the cooling tube; and a discharge connector configured to discharge a cooling medium, which has circulated in the cooling tube, to the cooling medium channel of the pack case.

Also, preferably, the supply connector and the discharge connector may be arranged with the cooling tube interposed therebetween.

In addition, the present disclosure also provides a vehicle, comprising at least one battery pack according to the former embodiments.

### Advantageous Effects

According to various embodiments as above, it is possible to provide a battery pack that may increase space utilization and maximize energy density by simplifying a cooling line structure, and a vehicle including the battery pack.

In addition, according to various embodiments as above, it is possible to provide a battery pack that may increase process efficiency by increasing assembly efficiency, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an exploded perspective view showing the battery pack according to an embodiment of the present disclosure.
FIG. 3 is a plan view showing the battery pack according to an embodiment of the present disclosure.
FIG. 4 is an enlarged view showing a part A of the battery pack of FIG. 3.
FIG. 5 is a drawing for illustrating an inner side wall of a pack case of the battery pack according to an embodiment of the present disclosure.
FIG. 6 is a cross-sectional view showing the pack case of the battery pack according to an embodiment of the present disclosure.
FIG. 7 is a cross-sectional view showing the B-B portion of FIG. 6.
FIG. 8 is a drawing for illustrating a cooling tube of a cell array structure of the battery pack according to an embodiment of the present disclosure.
FIG. 9 is a drawing for illustrating a connector unit of the battery pack according to an embodiment of the present disclosure.
FIG. 10 is a drawing for illustrating a battery pack according to another embodiment of the present disclosure.
FIG. 11 is an enlarged view showing a part C of the battery pack of FIG. 10.
FIG. 12 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

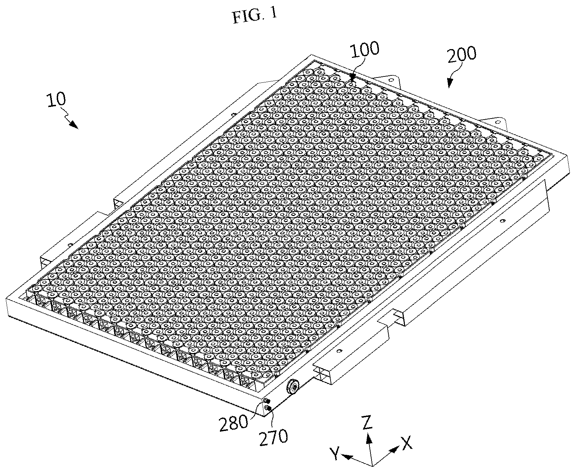

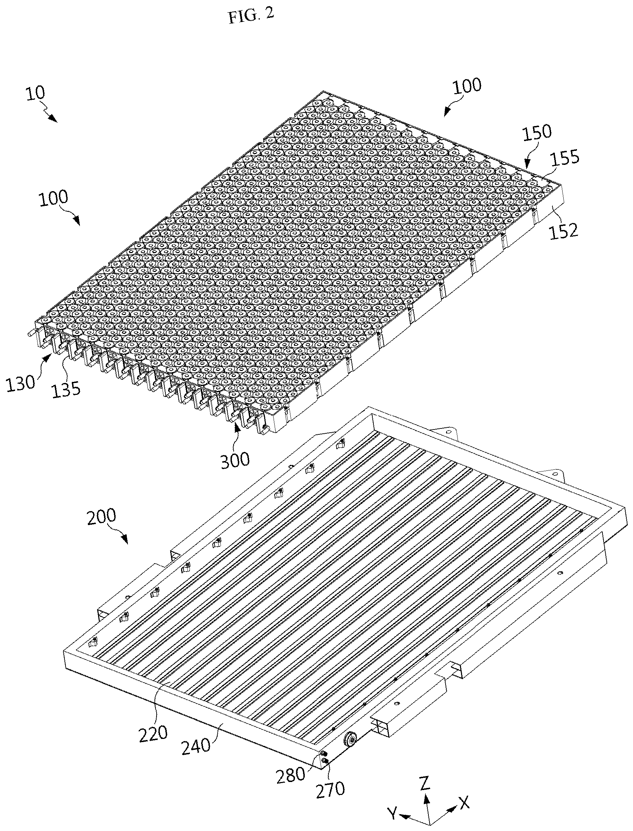

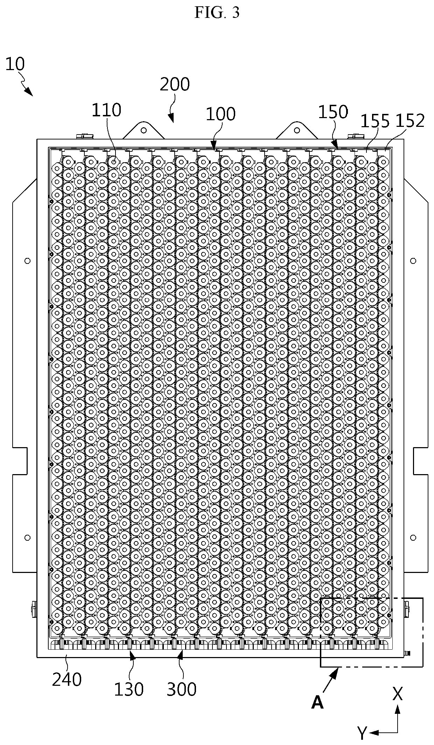

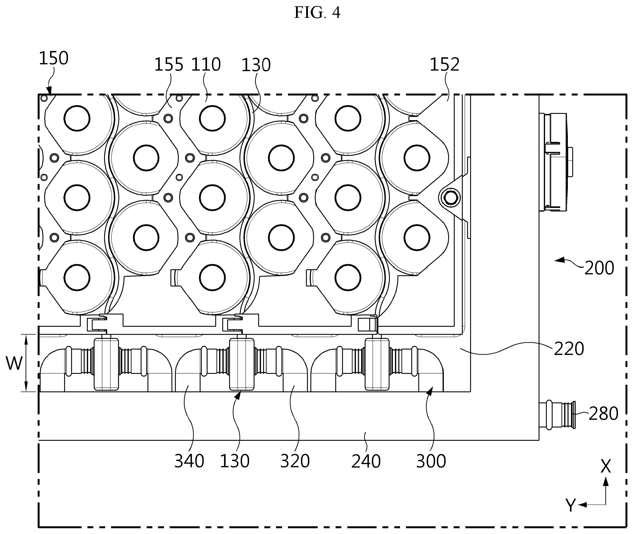

FIG. 1 is a diagram for illustrating a battery pack according to an embodiment of the present disclosure, FIG. 2 is an exploded perspective view showing the battery pack according to an embodiment of the present disclosure, FIG. 3 is a plan view showing the battery pack according to an embodiment of the present disclosure, and FIG. 4 is an enlarged view showing a part A of the battery pack of FIG. 3.

Referring to FIGS. 1 to 4, the battery pack 10 may include a cell array structure 100 and a pack case 200.

The cell array structure 100 may include a plurality of battery cells 110 and a plurality of cooling tubes 130 provided between the plurality of battery cells 110.

The plurality of battery cells 110 are secondary batteries and may be provided as cylindrical secondary batteries, pouch-shaped secondary batteries, or prismatic secondary batteries. Hereinafter, in this embodiment, the plurality of battery cells 110 will be described as being provided as cylindrical secondary batteries.

The plurality of cooling tubes 130 are for cooling the plurality of battery cells 110, and may cool the plurality of battery cells 110 through the flow of a cooling medium, explained later, therein. The plurality of cooling tubes 130 will be discussed in more detail in the related description below.

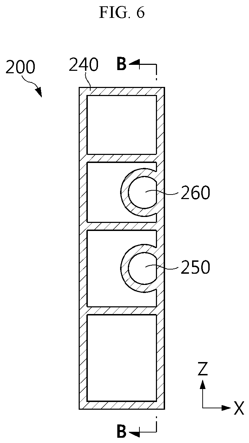

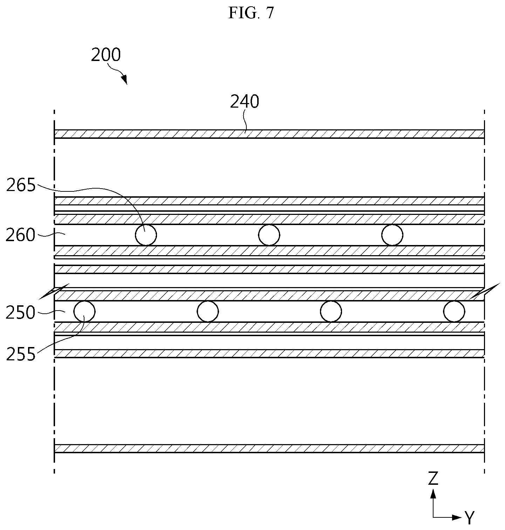

The pack case 200 may accommodate the cell array structure 100. The pack case 200 may have a cooling medium channel 250, 260 (see FIGS. 6 and 7) in communication with the plurality of cooling tubes 130. The cooling medium channel 250, 260 (see FIGS. 6 and 7) can may connected to a cooling device connection line 270, 280 provided at one end of the pack case 200 for connection with an external cooling device.

In the case of the battery pack 10 according to an embodiment of the present disclosure, since the pack case 200 includes a cooling medium channel 250, 260 (see FIGS. 6 and 7) that is in communication with the cooling tubes 130, the cooling medium channel may be configured without a separate pipe member having a cooling medium channel that is in communication with the cooling tubes.

Therefore, the battery pack 10 according to an embodiment of the present disclosure does not require additional components, such as additional pipe members for communication with the cooling tubes 130, and thus may significantly increase both space efficiency and energy density.

In addition, since the battery pack 10 according to an embodiment of the present disclosure may omit additional pipe members and other components, it is possible to increase manufacturing process efficiency and lower manufacturing costs, thereby securing price competitiveness.

Hereinafter, the pack case 200 according to an embodiment of the present disclosure will be described in more detail.

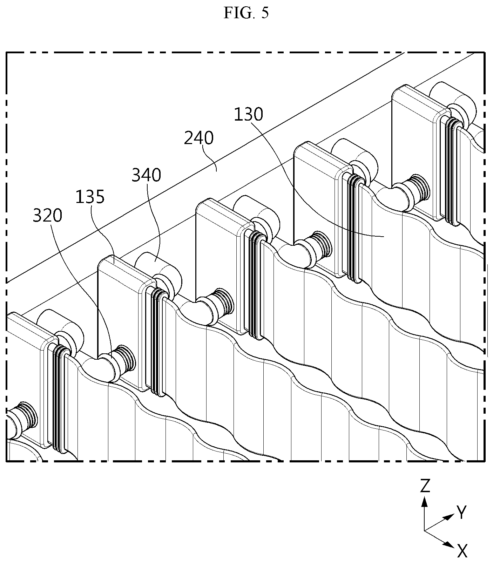

FIG. 5 is a drawing for illustrating an inner side wall of a pack case of the battery pack according to an embodiment of the present disclosure, FIG. 6 is a cross-sectional view showing the pack case of the battery pack according to an embodiment of the present disclosure, and FIG. 7 is a cross-sectional view showing the B-B portion of FIG. 6. Here, for convenience of explanation, the battery cells and the side frame of the cell array structure in Fig. 5 are not depicted.

Referring to FIGS. 5 to 7, the cooling medium channel 250, 260 of the pack case 200 may be formed integrally with the pack case 200. Specifically, the cooling medium channel 250, 260 may be formed integrally inside the pack case 200.

Therefore, in the battery pack 10 according to an embodiment of the present disclosure, the cooling medium channel 250, 260 may be configured by utilizing the structure of the pack case 200 itself, so it is possible to provide a battery pack 10 with maximized space efficiency and higher energy density.

The cooling medium channel 250, 260 is provided inside the side edge of the pack case 200 and may be connected to an external cooling device outside the pack case 200. The side edge of the pack case 200 is provided as an extruded structure having an internal hollow space, and the cooling medium channel 250, 260 may be formed in the internal hollow space within the side edge and provided together when the compression structure is formed.

Therefore, in the battery pack 10 according to an embodiment of the present disclosure, the cooling medium channel 250, 260 may be provided together when manufacturing the pack case 200 made as a compression structure, so it is possible to simplify the fastening structure while increasing process efficiency.

The pack case 200 may include a bottom plate 220 and an outer side wall 240.

The bottom plate 220 may support the cell array structure 100. To this end, a predetermined support space capable of supporting the cell array structure 100 may be provided in the bottom plate 220.

The outer side wall 240 is coupled with the bottom plate 220 and may surround the edge of the cell array structure 100. The cooling medium channel 250, 260 may be formed in the outer side wall 240. The outer side wall 240 is provided as an extruded aluminum structure having an internal hollow shape, and the cooling medium channel 250, 260 may be provided together when the outer side wall 240 is manufactured.

The cooling medium channel 250, 260 may include a cooling medium supply channel 250 and a cooling medium discharge channel 260.

The cooling medium supply channel 250 is provided integrally on one side of the inner side of the outer side wall 240 to supply a cooling medium to the plurality of cooling tubes 130, and may be formed in a predetermined length inside one side of the outer side wall 240.

The cooling medium may be provided as a cooling fluid capable of circulating through the cooling tubes 130 while cooling the battery cells 110. For example, the cooling medium may be provided as a cooling water. Without being limited thereto, the cooling medium may also be provided as any other cooling fluid capable of circulating through the cooling tubes 130 while cooling the battery cells 110.

The cooling medium supply channel 250 may include a plurality of supply channel connection portions 255. The plurality of supply channel connection portions 255 are arranged to be spaced apart from each other by a predetermined distance along the longitudinal direction (Y-axis direction) of the cooling medium supply channel 250 and may be connected to the supply connector 320 of the connector unit 300, explained later, to communicate with the supply connector 320.

The cooling medium supply channel 250 may be connected to the cooling device connection line 270, 280 (see FIG. 1), which is connected to an external cooling device for supplying the cooling medium, to communicate with the cooling device connection line 270, 280. The cooling device connection line 270, 270 is provided to be exposed to the outside of the pack case 200 and may include a cooling medium supply line 270 and a cooling medium discharge line 280. The cooling medium supply channel 250 may be connected to the cooling medium supply line 270 of the cooling device connection line 270, 280 to communicate with the cooling medium supply line 270.

The cooling medium discharge channel 260 is for discharging the cooling medium, which has circulated through the plurality of cooling tubes 130, to an external cooling device, and may be separated from the cooling medium supply channel 250. The cooling medium discharge channel 260 is integrally provided on one side of the outer side wall 240 so as to be spaced apart from the cooling medium supply channel 250 by a predetermined distance, and may be formed in a predetermined length inside one side of the outer side wall 240. Specifically, the cooling medium supply channel 250 and the cooling medium discharge channel 260 may be arranged to be spaced apart from each other by a predetermined distance in the height direction (Z-axis direction) of the pack case 200. For example, the cooling medium supply channel 250 may be arranged at a lower position than the cooling medium discharge channel 260 in the height direction (Z-axis direction) of the pack case 200.

The cooling medium discharge channel 260 may include a plurality of discharge channel connection portions 265. The plurality of discharge channel connection portions 265 may be arranged to be spaced apart from each other by a predetermined distance along the longitudinal direction (Y-axis direction) of the cooling medium discharge channel 260 and may be connected to the discharge connector 340 of the connector unit 300, explained later, to communicate with the discharge connector 340. The plurality of discharge channel connection portions 265 may be arranged to be staggered with the plurality of supply channel connection portions 255 in the longitudinal direction (Y-axis direction) of the cooling medium channel 250, 260.

The cooling medium discharge channel 260 may be connected to the cooling device connection line 270, 280, which is connected to an external cooling device for providing the cooling medium, to communicate with the cooling device connection line 270, 280. Specifically, the cooling medium discharge channel 260 may be connected to the cooling medium discharge line 280 of the cooling device connection line 270, 280 to communicate with the cooling medium discharge line 280.

Hereinafter, other components of the battery pack 10 according to an embodiment of the present disclosure will be described in more detail.

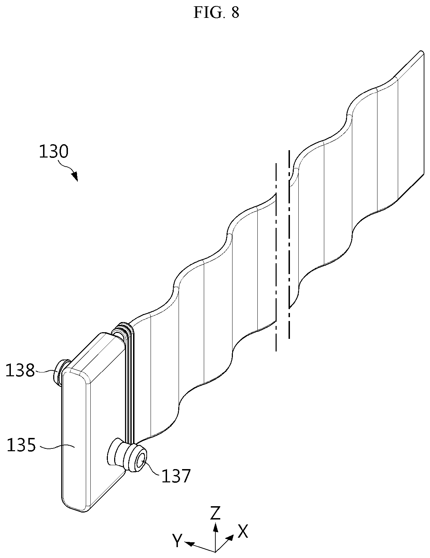

FIG. 8 is a drawing for illustrating a cooling tube of a cell array structure of the battery pack according to an embodiment of the present disclosure.

Referring to FIG. 8 along with FIGS. 1 to 7 above, the plurality of cooling tubes 130 of the cell array structure 100 may have an internal cooling channel for circulation of the cooling medium and may be formed in a predetermined length along the longitudinal direction (X-axis direction) of the pack case 200. A cooling medium inlet/outlet 135 may be provided at an end of the plurality of cooling tubes 130 to guide the inflow and outflow of the cooling medium. The cooling medium inlet/outlet 135 may be provided between the plurality of battery cells 110 and the pack case 200. Specifically, the cooling medium inlet/outlet 135 may be provided between the plurality of battery cells 110 and one inner wall of the outer side wall 240 of the pack case 200. The cooling medium supply channel 250 and the cooling medium discharge channel 260 may be provided inside one inner wall of the outer side wall 240.

The cooling medium inlet/outlet 135 may include a supply connection portion 137 and a discharge connection portion 138. The supply connection portion 137 is provided to protrude by a predetermined length on one surface (-Y-axis direction) of the cooling medium inlet/outlet 135 and may be connected to a supply connector 320 of the connector unit 300, explained later. The discharge connection portion 138 is provided to protrude by a predetermined length on the other surface (+Y-axis direction) of the cooling medium inlet/outlet 135 and may be connected to a discharge connector 340 of the connector unit 300, explained later.

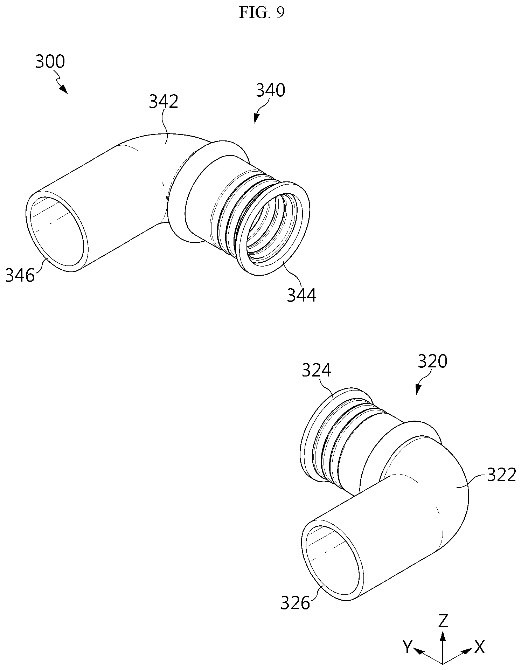

FIG. 9 is a drawing for illustrating a connector unit of the battery pack according to an embodiment of the present disclosure.

Referring to FIG. 9 along with FIGS. 1 to 8 above, the battery pack 10 may include a connector unit 300.

The connector unit 300 is connected to the plurality of cooling tubes 130 and may be coupled to the pack case 200 in communication with the cooling medium channel 250, 260. The connector unit 300 is connected to the plurality of cooling tubes 130 and may guide the interconnection of the cooling medium channels 250 and 260.

The connector unit 300 may connect the plurality of cooling tubes 130 and the pack case 200 in the space between the cell array structure 100 within the pack case 200 and the pack case 200. Specifically, the connector unit 300 may connect the cooling medium inlet/outlet 135 of the plurality of cooling tubes 130 and the outer side wall 240 of the pack case 200 so as to communicate the cooling tubes 130 and the cooling medium channel 250, 260 in the space between one end of the cell array structure 100 within the pack case 200 and one inner wall of the outer side wall 240.

The connector unit 300 may have a shorter length in the longitudinal direction (X-axis direction) of the plurality of cooling tubes 130 than the cooling medium inlet/outlet 135. Therefore, in an embodiment of the present disclosure, a size increase in one side space W within the pack case 200 due to the connector unit 300 may not occur.

The connector unit 300 may be provided in plurality corresponding to the number of the plurality of cooling tubes 130. The plurality of connector units 300 may connect each of the cooling tubes 130 to the cooling medium channel 250, 260 of the pack case 200 to communicate each other.

Hereinafter, the plurality of connector units 300 will be described in more detail.

Each of the plurality of connector units 300 may include a supply connector 320 for supplying a cooling medium toward the cooling tube 130 and a discharge connector 340 for discharging a cooling medium, which has circulated within the cooling tube 130, to the cooling medium channel 260 of the pack case 200. The supply connector 320 and the discharge connector 340 may be arranged with the cooling tube 130 interposed therebetween.

The supply connector 320 may include a connector body 322, a tube connection portion 324, and a case connection portion 326.

The connector body 322 forms the outer appearance of the supply connector 320 and may have a roughly folded shape. The tube connection portion 324 is provided at one end of the connector body 322 and may be connected to the supply connection portion 137 of the cooling medium inlet/outlet 135 of the cooling tube 130 to communicate with the supply connection portion 137. The case connection portion 326 is provided at the other end of the connector body 322 and may be connected to the supply channel connection portion 255 of the pack case 200 to communicate with the supply channel connection portion 255.

The discharge connector 340 may include a connector body 342, a tube connection portion 344, and a case connection portion 346.

The connector body 342 forms the outer appearance of the discharge connector 340 and may have a roughly folded shape. The tube connection portion 344 is provided at one end of the connector body 342 and may be connected to the discharge connection portion 138 of the cooling medium inlet/outlet 135 of the cooling tube 130 to communicate with the discharge connection portion 138. The case connection portion 346 is provided at the other end of the connector body 342 and may be connected to the discharge channel connection portion 265 of the pack case 200 to communicate with the discharge channel connection portion 265.

Referring to FIGS. 1 to 4 again, the cell array structure 100 of the battery pack 10 may include a side frame 150.

The side frame 150 may accommodate the plurality of battery cells 110 and the plurality of cooling tubes 130 in the longitudinal direction (X-axis direction) of the pack case 200. The side frame 150 may include a pair of side walls 152 and a plurality of side structures 156.

The pair of side walls 152 are arranged on the outermost sides (+Y-axis direction and -Y-axis direction) of the cell array structure 100 and may support at least a row of battery cells 110 in the longitudinal direction (X-axis direction) of the pack case 200. The pair of side walls 152 may be fixed to the outer side wall 240 of the pack case 200 using a fastening member or the like. Therefore, the cell array structure 100 may be more stably fixed and supported to the pack case 200.

The plurality of side structures 155 are provided between the pair of side walls 152 in the stacking direction (Y-axis direction) of the plurality of cooling tubes 130 and may support at least two rows of battery cells 110 in the longitudinal direction (X-axis direction) of the pack case 200. Specifically, the plurality of side structures 155 may support the battery cells 110 along the longitudinal direction (X-axis direction) on the front (+Y-axis direction) and rear (-Y-axis direction) sides along the stacking direction (Y-axis direction), respectively.

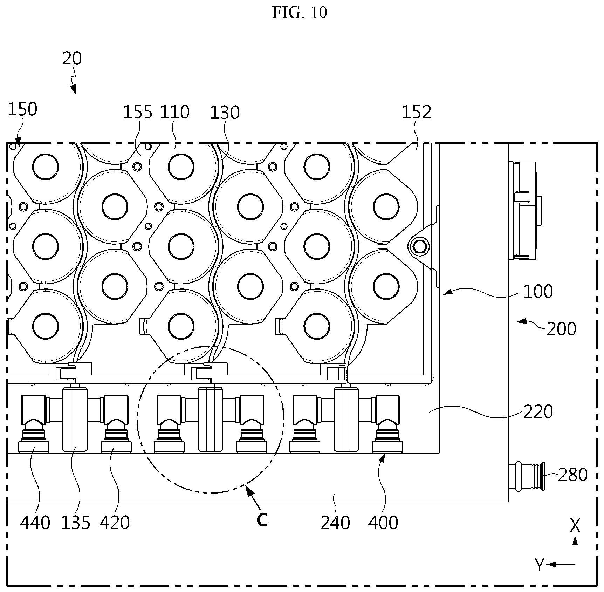

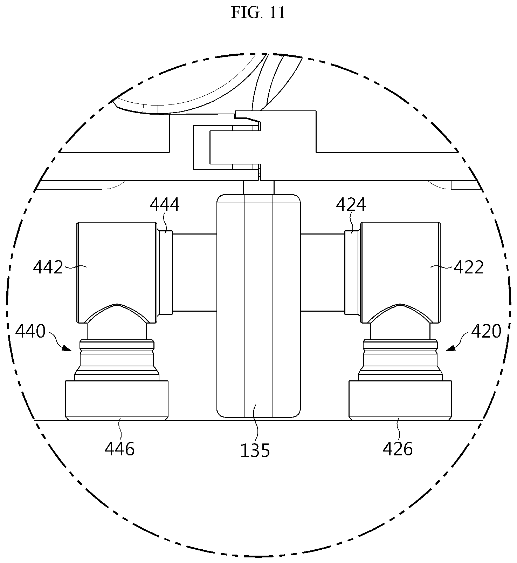

FIG. 10 is a drawing for illustrating a battery pack according to another embodiment of the present disclosure, and FIG. 11 is an enlarged view showing a part C of the battery pack of FIG. 10.

The battery pack 20 according to this embodiment is similar to the battery pack 10 of the former embodiment, so features substantially identical or similar to those of the former embodiment will not be described again, and features different from the former embodiment will be described in detail.

Referring to FIGS. 10 and 11, the battery pack 20 may include a cell array structure 100, a pack case 200, and a plurality of connector units 400.

The cell array structure 100 and the pack case 200 are substantially the same or similar to the former embodiment, and thus will not be described in detail again.

Each of the plurality of connector units 400 may include a supply connector 420 for supplying a cooling medium toward the cooling tube 130 and a discharge connector 440 for discharging a cooling medium, which has circulated within the cooling tube 130, to the cooling medium channel 260 (see FIG. 7) of the pack case 200. The supply connector 420 and the discharge connector 440 may be arranged with the cooling tube 130 interposed therebetween.

The supply connector 420 may include a connector body 422, a tube connection portion 424, and a case connection portion 426.

The connector body 422 forms the outer appearance of the supply connector 420, is provided in a roughly straight shape, and may have a shorter length than the coolant inlet/outlet 135 of the cooling tube 130 in the longitudinal direction (X-axis direction) of the cooling tube 130. The tube connection portion 424 is provided at one end of the connector body 422 and may be connected to the supply connection portion 137 of the cooling medium inlet/outlet 135 of the cooling tube 130 to communicate with the supply connection portion 137. The case connection portion 326 is provided at the other end of the connector body 422 and may be connected to the supply channel connection portion 255 (see FIG. 7) of the pack case 200 to communicate with the supply channel connection portion 255.

The discharge connector 440 may include a connector body 442, a tube connection portion 444, and a case connection portion 446.

The connector body 442 forms the outer appearance of the discharge connector 440, is provided in a roughly straight shape, and may have a shorter length than the coolant inlet/outlet 135 of the cooling tube 130 in the longitudinal direction (X-axis direction) of the cooling tube 130. The tube connection portion 444 is provided at one end of the connector body 442 and may be connected to the discharge connection portion 138 of the cooling medium inlet/outlet 135 of the cooling tube 130 to communicate with the discharge connection portion 138. The case connection portion 446 is provided at the other end of the connector body 442 and may be connected to the discharge channel connection portion 265 (see FIG. 7) of the pack case 200 to communicate with the discharge channel connection portion 265.

In this way, the connector unit 400 may be provided in a straight shape rather than a folded shape as in the former embodiment. Therefore, in an embodiment of the present disclosure, the connector unit 400 may be provided in a simpler structure, thereby further increasing the manufacturing efficiency of the battery pack 20 and further reducing the manufacturing cost.

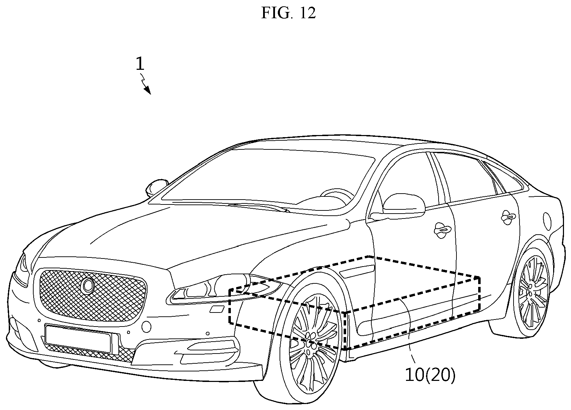

FIG. 12 is a drawing for illustrating a vehicle according to an embodiment of the present disclosure.

Referring to FIG. 12, the vehicle 1 according to an embodiment of the present disclosure may include at least one battery pack 10, 20 according to the above-described embodiment of the present disclosure. In addition, the vehicle 1 according to an embodiment of the present disclosure may further include various other components included in a vehicle, in addition to the battery pack 10, 20. For example, the vehicle 1 according to an embodiment of the present disclosure may further include a vehicle body, a motor, and a control device such as an ECU (electronic control unit), in addition to the battery pack 10, 20 according to an embodiment of the present disclosure.

In addition, the battery pack 10, 20 according to an embodiment of the present disclosure may be provided to other devices, instruments, and equipment, such as an energy storage device (ESS) that uses secondary batteries, in addition to the vehicle 1.

According to various embodiments as above, it is possible to provide a battery pack 10, 20 that may prevent heat propagation to adjacent battery cells when a thermal event occurs in a battery cell, and a vehicle 1 including the battery pack.

In addition, according to various embodiments as above, it is possible to provide a battery pack 10, 20 that may simplify the manufacturing process and reduce manufacturing costs, and a vehicle 1 including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a cell array structure including a plurality of battery cells and a plurality of cooling tubes provided between the plurality of battery cells; and
a pack case configured to accommodate the cell array structure and having a cooling medium channel in communication with the plurality of cooling tubes.

2. The battery pack according to claim 1,
wherein the cooling medium channel is formed integrally with the pack case.

3. The battery pack according to claim 1,
wherein the cooling medium channel is provided inside a side edge of the pack case and connected to an external cooling device outside the pack case.

4. The battery pack according to claim 1,
wherein the pack case includes:
a bottom plate configured to support the cell array structure; and
an outer side wall connected to the bottom plate and surrounding an edge of the cell array structure,
wherein the cooling medium channel is formed in the outer side wall.

5. The battery pack according to claim 1,
wherein the cooling medium channel includes;
a cooling medium supply channel configured to supply a cooling medium to the plurality of cooling tubes; and
a cooling medium discharge channel separated from the cooling medium supply channel and configured to discharge a cooling medium, which has circulated through the plurality of cooling tubes, to an external cooling device.

6. The battery pack according to claim 5,
wherein the cooling medium supply channel and the cooling medium discharge channel are arranged to be spaced apart from each other by a predetermined distance in a height direction of the pack case.

7. The battery pack according to claim 1, further comprising:
a connector unit connected to the plurality of cooling tubes and coupled to the pack case in communication with the cooling medium channel.

8. The battery pack according to claim 7,
wherein the connector unit connects the plurality of cooling tubes and the pack case in a space between the cell array structure within the pack case and the pack case.

9. The battery pack according to claim 7,
wherein a cooling medium inlet/outlet to guide inflow and outflow of a cooling medium is provided at an end of the plurality of cooling tubes, and
wherein the cooling medium inlet/outlet is provided between the plurality of battery cells and the pack case.

10. The battery pack according to claim 9,
wherein the connector unit has a shorter length than the cooling medium inlet/outlet in a longitudinal direction of the plurality of cooling tubes.

11. The battery pack according to claim 7,
wherein the connector unit is provided in plurality corresponding to the number of the plurality of cooling tubes, and connects each cooling tube to the cooling medium channel of the pack case to communicate with the cooling medium channel.

12. The battery pack according to claim 11,
wherein each of the plurality of connector units includes:
a supply connector configured to supply a cooling medium to the cooling tube; and
a discharge connector configured to discharge a cooling medium, which has circulated in the cooling tube, to the cooling medium channel of the pack case.

13. The battery pack according to claim 12,
wherein the supply connector and the discharge connector are arranged with the cooling tube interposed therebetween.

14. A vehicle comprising at least one battery pack according to any one of claims 1 to 13.
